# EUROPÄISCHE PATENTSCHRIFT

(11) **EP 2 421 635 B1**
(45) Veröffentlichungstag und Bekanntmachung des Hinweises auf die Patenterteilung: **07.05.2014**
(21) Anmeldenummer: 10717593.7
(22) Anmeldetag: 22.04.2010
(51) Int. Cl.: B01F 7/18, B01F 7/00, A23G 1/10

(54) **SCHER-/MISCHWERKZEUG**
SHEARING/MIXING TOOL
OUTIL DE CISAILLEMENT/MÉLANGE

(30) Priorität: 22.04.2009 DE 102009018178
(43) Veröffentlichungstag der Anmeldung: 29.02.2012
(73) Patentinhaber: Richard Frisse GmbH, 32064 Bad Salzuflen (DE); Bühler AG, 9240 Uzwil (CH)
(72) Erfinder: BRÄKER, Willy, 9500 Wil (CH); HARTSIEKER, Martin, 32549 Bad Oeynhausen (DE); DOLIC, Danijel, CH-9244 Niederuzwil (CH); BRAUN, Peter, CH-8280 Kreuzlingen (CH)
(74) Vertreter: Hepp Wenger Ryffel AG
(86) Internationale Anmeldenummer: PCT/EP2010/055323
(87) Internationale Veröffentlichungsnummer: WO 2010/122092

(56) Entgegenhaltungen:
- EP-A1- 1 302 238
- BE-A1- 888 969
- DE-A1- 3 020 086
- DE-A1- 19 835 347
- JP-A- 11 235 522
- US-A- 1 459 148
- US-A- 3 434 804
- US-A- 4 767 214
- US-A1- 2007 286 017

## Beschreibung

Die Erfindung geht von bekannten Mischwerkzeugen sowie bekannten Scherwerkzeugen aus, die an einer Welle befestigt sind, wobei die Welle in einem zumindest teilweise zylindrischem Trog drehbar gelagert ist und die Mischwerkzeuge in durchwegs geringem Abstand von einer Troginnenfläche enden und die Welle Antriebsmittel aufweist.

Derartige Mischwerkzeuge sowie derartige Scherwerkzeuge sind seit Jahrzehnten bekannt und werden meist in weitgehend horizontal ausgerichteten Trögen eingesetzt, um Schüttgüter und flüssige Massen jedweder Art zu vermischen oder einer Scherbehandlung zu unterziehen. Diese Gesamtwirkungsweise hat sich für die Behandlung von Schokolade-, Compound- und Füllmassen als äußerst günstig erwiesen.

Stand der Technik für Mischwerkzeuge sind Pflugscharschaufeln, wie sie durch die DE-PS 1276986, bekanntgeworden sind. Diese Mischwerkzeuge werden in einer Trommel derart angeordnet, dass eine Produktverteilung im Spalt zwischen dem Mischwerkzeug und der Trommelinnenfläche nicht stattfinden kann. Dies wird am Mischwerkzeug durch einen entgegen der Umlaufrichtung des Schleuderwerks sich öffnenden Freiwinkel erreicht. Um diese Vorgabe zu erfüllen, kann die Bodenwand des Mischwerkzeugs zurückversetzt sein, oder sie ist entsprechend angeschrägt oder das Mischwerkzeug selbst wird schräg angestellt, so dass das Mischwerkzeug eine die Trommelinnenwand abkratzende, reinigende Funktion erhält. Für reine Mischwerkzeuge ist dies nicht von Einfluss, weil die eigentliche Mischwirkung, die die Werkzeuge erfüllen müssen, dadurch nicht beeinträchtigt wird.

Ebenso Stand der Technik für Mischwerkzeuge sind Wurfschaufeln. Mischwerkzeuge solcher Art sind sichelförmige, zur Querachse der Wellenachse schräg gestellte, gerade und flache, blattförmige Schaufeln mit durchgehend gleichmäßig geringstmöglichem Abstand zur Trommelinnenwand, wobei die der Trommelinnenwand nächst anliegende Schaufelkante logischerweise eine elliptische Kurve sein muss. Diese Mischwerkzeuge werden in einer Trommel derart angeordnet, dass im Spalt zwischen dem Mischwerkzeug und der Trommelinnenfläche das Produkt weder eingezogen, gepresst oder geschert wird, sondern vom Mischer vorhergeschoben wird, noch dass gar eine Keilwirkung stattfinden kann. Mit anderen Worten: Es bildet sich kein Scherspalt aus, und damit können nur geringe Materialumstruktierungen stattfinden.

Bekannt sind auch Scherwerkzeuge, die wiederum mehr einen scherenden als mischenden Einfluss ausüben sollen. Diese Werkzeuge haben über ihre ganze Länge, in Umlaufrichtung der Werkzeuge gesehen, im vorderen Bereich durchgehend einen größeren Abstand zur Troginnenfläche als durchgehend im hinteren Bereich, was eine das Material einziehende Wirkung hervorruft. Allerdings ist bei diesen Werkzeugen die Mischwirkung gering.

Des weiteren ist aus der DE-A-4344995 eine Konstruktion bekanntgeworden, die ein Mischwerkzeug, wie eine bekannte Pflugscharschaufel, dahingehend verbessert , dass neben dem Mischvorgang auch Materialumstrukturierungen begünstigt werden. Zu diesem Zweck wird das oder die Mischwerkzeuge, in Umlaufrichtung der Mischwerkzeuge gesehen, im vorderen Bereich weiter von der Trommelinnenfläche beabstandet als im hinteren Bereich.

Dies führt bei den gedachten Produkten zu einer erheblichen Produktverkeilung, und das einmal im Spalt gefangene Produkt, insbesondere begünstigt durch die bei enger werdendem Spalt dafür größer werdende Scherfläche, kann bei übermäßiger Beanspruchung kaum mehr der Pressung ausweichen, was bei Suspensionen bis zu einem Mahleffekt für die Feststoffteile führen kann. Die dadurch erzeugte übermäßige Reibung kann zu örtlichen Überhitzungen des Produktes führen, was unerwünscht sein kann.

Aus der GB 702,175 A ist ein Mischer bekannt, bei dem die Spitzen der in Form doppelseitiger Pflugscharschaufeln ausgebildeter Mischwerkzeugschaufeln, in Umlaufrichtung gesehen, vorne liegen und zu vermischendes Material von den Troginnenwänden abschaben.

Die DE 1 082 576 A beschreibt ein Gegenstrommischwerk, bei dem an Tragarmen Rührschaufeln winklig angeordnet sind. Die Tragarme sind schwertähnlich gestaltet und derart im Winkel zur Achse der Rührwerkswelle gestellt, dass die Förderrichtung der Tragarmfläche der Förderrichtung der Rührschaufeln entgegengesetzt ist.

Ein weiteres Scher- und Mischwerkzeug gemäß dem Oberbegriff des Anspruchs 1 ist in der DE-A-19636989 offenbart, das durch
a) das Scher-/Mischwerkzeug an einer radialen Außenseite des Werkzeugträgers mindestens eine sichel- und löffelförmige Scher-/Wurfschaufel aufweist,
b) die Scher-Wurfschaufel von ihrer Sichelspitze zu ihrem Ende gesehen, mit einem Biegewinkel (α) bogenförmig zur Längsachse der Scher-/Wurfschaufel gekrümmt ist, wobei
c) die Tangenten an die periphere Außenfläche der Scher-/Wurfschaufel und an die Troginnenfläche einen weiteren Winkel (γ) einschließen, so dass der Abstand zwischen der Troginnenfläche und der peripheren Außenfläche der Scher-/Wurfschaufel, von der Sichelspitze her gesehen, zunimmt, und wobei
d) die Längsachse der Scher-/Wurfschaufel einen Anstellwinkel (ß) zur Achse der Welle bildet, und
e) an der Scher-/Wurfschaufel der löffelförmige Teil in Drehrichtung und die sichelförmige Spitze entgegengesetzt zur Drehrichtung weist, gekennzeichnet ist.

Aus dem Stand der Technik sind verbesserte Scher-/Mischwerkzeuge bekannt.

JP 11-235522 zeigt ein Mischwerkzeug mit Arm und Schaufelteil, das an der Wand eines Gefässes entlang streift. Das Mischwerkzeug besitzt Öffnungen im Arm bzw. in der Schaufel.

EP 1 302 238 offenbart einen Haltearm für einen Blatthalter, der in einem Mischer für Beton, Mörtel und ähnliches Material eingesetzt wird. Der Arm weist eine Öffnung auf.

US 1,459,148 zeigt ein Scher-/Mischwerkzeug zum Mischen und Schlagen von Lebensmittelmassen mit Öffnungen in der Schaufel.

US 3,434,804 betrifft ein Rührwerkzeug zum Einsatz in chemischen und physikalischen Prozessen mit Öffnungen in den Armen und mit kreisförmig gebogenen Schaufeln.

US 4,767,214 zeigt einen Mischer für Backteige. Der Mischer umfasst ein Scher-/Mischwerkzeug mit Öffnungen in kreisförmig gebogenen Schaufelelementen.

DE 198 35 347 betrifft eine Vorrichtung zum Conchieren von Schokoladenmassen. Die Vorrichtung umfasst einen Behälter mit einer seitlichen Knetkammer, in welcher Knetwerkzeuge mit Knetblättern angeordnet sind. Die Knetblätter weisen jeweils in ihrer Blattfläche wenigstens eine Öffnung auf.

US 2007/286017 offenbart ein schaufelartiges Spatenwerkzeug zum Abkratzen der Innenfläche eines Behälters. Das Werkzeug hat im Arm eine Öffnung.

BE 888.969 betrifft eine Vorrichtung für die Herstellung von Eiscreme und zeigt ein schaufelartiges Werkzeug mit einem länglichen Schlitz.

DE 30 20 086 zeigt einen Mischer zum Stabilisieren von Oxymethylencopolymeren unter Erhitzung. Der Mischer umfasst Rühr- bzw. Schabblätter, die mit so genannten Entweichungslöchern ausgestattet sind.

Aufgabe der vorliegenden Erfindung ist es, ein Mischwerkzeug, wie eine bekannte Wurfschaufel, dahingehend zu verbessern, dass neben dem Mischvorgang auch Materialumstrukturierungen im zu behandelnden Produkt begünstigt werden (Scherwerkzeug), und im gleichen Schritt neben dem Schervorgang auch eine beachtliche Mischwirkung erzielt werden kann.

Wichtiges Ziel der Verbesserung ist dabei, bei optimaler Mischleistung eine das Produkt noch schonende und trotzdem höchst effiziente Materialumstrukturierung herbeizuführen und das Werkzeug so auszubilden, dass bei über die Prozesszeit sich ändernder Produktrheologie, -struktur und -konsistenz immer wenigstens ein zur zeit-abhängigen Struktur des Produktes passender, optimal ausgebildeter Scherspaltabschnitt als Teil der ganzen Länge des Scherspaltes zur Verfügung steht. Des weiteren soll das Produkt keine örtlichen Überhitzungen erleiden, noch soll bei Suspensionen ein Mahleffekt, wirkend auf die Feststoffanteile, entstehen.

Erfindungsgemäß wird diese Aufgabe, insbesondere unter Weiterbildung des Werkzeuges gemäss der DE-A-19636989, durch ein Scher-/Mischwerkzeug mit den Merkmalen des Anspruchs 1 gelöst, welches an einer in einem wenigstens teilweise zylindrischen Trog (3) koaxial und drehbar gelagerten Welle anordbar ist. Das Scher-/Mischwerkzeug bildet dann mit der Welle über einen Werkzeugträger eine Rotoranordnung. Das Scher-/Mischwerkzeug umfasst eine Scher-/Wurfschaufel und mindestens einen Arm, der gerade, schräg gestellt und/oder geknickt ist.

Die Scher-/Wurfschaufel ist gekrümmt, sie kann sichelförmig sein oder die Form einer Platte aufweisen. Diese kann z.B. eine polygone, rechteckige, oder trapezförmige Aussenkontur aufweisen.

Der oder die Arme können an einem Werkzeugträger montierbar oder einteilig mit diesem ausgeführt sein. Der Werkzeugträger seinerseits ist auf der Welle befestigbar. Er kann als ringförmiges Befestigungselement ausgebildet sein, das insbesondere geeignet ist, auf einer Welle mit rundem Querschnitt montierbar zu sein.

Es können auch mehrere Scher-/Mischwerkzeuge auf einer Welle angebracht werden oder es kann mindestens ein Scher-/Mischwerkzeug zusammen mit einem oder mehreren weiteren Werkzeugen, z.B. einem Wandschaber, auf einer Welle angebracht werden.

Das Werkzeug weist mindestens eine Öffnung auf.

Versuche zeigten, dass das Loch im Werkzeug zusätzliche positive technologische Eigenschaften, bessere Fluidisierung in der Trockenphase und zusätzliche Reaktionsoberfläche am Produktschleier in der Flüssigphase, insbesondere bei einem Conchier- und Verflüssigungsprozess, hat. Das Werkzeug bietet auch beim Mischprozess zusätzliche Vorteile, so eine bessere Durchmischung der Komponenten,

Erfindungsgemäß ist mindestens eine Öffnung zwischen Arm und Scher-/Wurfschaufel vorgesehen.

Im zuletzt genannten Fall wird die Öffnung einerseits von Arm, andererseits von der Scher-/Wurfschaufel begrenzt. In einer bevorzugten Ausführung der Erfindung ist mindestens eine Öffnung in einem Arm und/oder zwischen Armen vorgesehen,

Der Anteil der zu bearbeitende Masse, der bei der Rotation des Werkzeuges nicht zwischen Scher-/Wurfschaufel und Troginnenwand gerät, sondern innerhalb der Scher-/Wurfschaufel verbleibt, wird zumindest teilweise durch die Öffnung geführt und erfährt beim Durchtritt eine Bearbeitung, insbesondere einer Scherung, eine Dehnung und/oder einer Vermischung.

Die Bearbeitung der Masse pro Umdrehung wird in diesem Fall also intensiviert, da der Massedurchsatz der bearbeiteten Masse erhöht wird.

Je grösser der Abstand der Öffnung von der Welle ist, desto grösser ist die Geschwindigkeit der Öffnung und desto intensiver die Bearbeitung. Die Öffnung wird daher bevorzugt im von der Achse radial entferntesten Bereich des Arms angeordnet.

In einer bevorzugten Ausführung der Erfindung ist mindestens eine Öffnung in der Scher-/Wurfschaufel vorgesehen.

Auch in diesem Fall kann der Teil der zu bearbeitende Masse, der bei der Rotation des Werkzeuges nicht zwischen Scher-/Mischwerkzeug und Troginnenwand gerät, sondern radial betrachtet innerhalb der Scher-/Wurfschaufel verbleibt, zumindest teilweise durch die Öffnung geführt werden und so einer Bearbeitung unterworfen werden.

Andererseits kann aber auch zumindest ein Anteil der Masse, der in den Spalt zwischen Scher-/Mischwerkzeug und Troginnenwand gerät, diesem Spalt durch die Öffnung wieder entkommen. Die Masse wird dabei weniger stark gequetscht oder geschert und erfährt eine eher schonende Behandlung.

Je nach dem, wie die Form des Werkzeuges ausgelegt ist, zum Beispiel je nach der Neigung des Scher-/Wurfschaufel, bzw. je nach Spaltabstand oder je nach Verlauf des Spalteabstandes zwischen Scher-/Mischwerkzeug und Troginnenwand und je nach Drehrichtung des Werkzeuges, überwiegt eher der eine oder der andere Effekt.

Das Werkzeug kann daher auch zunächst in der einen Richtung, dann in der anderen Richtung gedreht werden und die Masse zunächst intensiv, danach schonend oder umgekehrt behandelt werden.

Das Werkzeug kann so ausgeführt sein, dass es einerseits als Wandschaber wirkt, die Masse andererseits gleichzeitig oder anschliessend, z.B. bei einer Umkehrung der Rotationsrichtung, bearbeitet, insbesondere schert, dehnt und/oder mischt.

Die Öffnung kann eine beliebige Geometrie aufweisen. Sie ist vorzugsweise vieleckig, insbesondere dreieckig, und/oder gerundet. Ist die Öffnung in der Schaufel angebracht, so folgt die Aussenkontur bevorzugt im Wesentlichen der Kontur der Schaufel. Bei einer dreieckigen Schaufelfläche ist die Öffnungsfläche also im Wesentlichen ebenfalls dreieckig.

Wenn der Arm geknickt ausgeführt ist, so ist bevorzugt wenigstens ein Schenkel desselben rechtwinklig zur Wellenachse angeordnet. Bei der Drehung des Werkzeugs sammelt dieser Schenkel Material auf und führt es der Öffnung zu.

Ein in einem geknickten Arm befindliches Loch ist bevorzugt im Knick angeordnet, wo sich zu bearbeitenden Masse sammelt, wenn sich das Werkzeug in Richtung des Knicköffnungswinkels dreht.

In einer vorteilhaften Ausführung der Erfindung verengt und/oder erweitert sich die Querschnittsfläche in und/oder gegen die Drehrichtung, sodass bevorzugt die Ein- und Austrittsfläche mindestens einer Öffnung unterschiedlich gross sind.

Bei einer genügend grossen Materialdicke verändert sich die Querschnittsfläche der Öffnung derart, dass die Öffnung die Form eines sich verengenden oder aufweitenden Trichters hat und es je nach Drehrichtung zu einer Dehn- oder Scherströmung des Materials innerhalb der Öffnung kommt.

Die Querschnittsfläche kann sich auch zunächst verengen, dann wieder aufweiten oder umgekehrt.

Das Werkzeug kann eine Öffnung im Armbereich und eine zusätzlich Öffnung in der Schaufel aufweisen. Es können auch mehrere Öffnungen in der Schaufel vorgesehen sein. Je nach der Querschnittsfläche der jeweiligen Öffnung und je nach der Summe der Querschnittsflächen ist Bearbeitung der Masse mehr oder weniger intensiv.

In einer vorteilhaften Ausführung der Erfindung weist das erfindungsgemässe Scher-/Mischwerkzeug eine Öffnung auf, die sich zur Aufnahme eines Einsatzes eignet. Der Einsatz kann keine oder mindestens eine Öffnung besitzen. Bevorzugt kann der Benutzer aus einer Auswahl verschiedener Einsätze wählen und das Werkzeug so ausstatten, dass es für bestimmte zu bearbeitenden Massen und/oder für bestimmte Bearbeitungsvorgänge besonders geeignet ist.

Alternativ kann der Benutzer aus einer Auswahl von Werkzeugen wählen, die sich in der Anordnung, Ausführung und/oder Anzahl von Öffnungen unterscheiden, die er je nach zu bearbeitender Masse und/oder für Bearbeitungsvorgang auf die Welle montiert.

Das erfindungsgemässe Scher-/Mischwerkzeug weist bevorzugt eine sichelförmige, im Querschnitt vorzugsweise kreisbogenförmig gebogene, in Längsrichtung vorzugsweise gerade Scher-Wurfschaufel auf, welche in einem Winkel von 1 - 45° schräg zur Wellenachse in der Trommel rotieren, wobei der Biegewinkel im Querschnitt der Scher-Wurfschaufel von der Sichelspitze her nach hinten vorzugsweise immer größer wird, so dass die Scher-Wurfschaufel nach hinten eine umgedreht löffelförmige Fläche beinahe parallel zur Troginnenfläche bildet und dass mit der Vergrößerung des Biegewinkels der Abstand der Scher-Wurfschaufelperipherie zur Troginnenwand, z.B. bis zu über 50 mm, immer größer wird (Winkel γ).

Der minimale Abstand zur Troginnenwand beträgt je nach zu bearbeitender Masse und nach Bearbeitungsschritt 0.1-1 mm.

Der Spalt zwischen Werkzeug und Troginnenwand hat bevorzugt eine Weite von 1-3 mm, wenn das Werkzeug wandabstreifend arbeiten soll, Für eine scherende Behandlung der zu bearbeitenden Masse hat der Spalt zwischen Werkzeugkante und Troginnenwand bevorzugt eine Weite von etwa 5-30mm.

Das über einen Arm mit der Antriebswelle kraftschlüssig verbundene Scher-/Mischwerkzeug hat vorzugsweise mindestens einen weiteren Arm, der mit einem in Drehrichtung wirkenden Wandschaber versehen ist.

Es versteht sich, dass gemäß der beschriebenen geometrischen Form der Scher-Wurfschaufel zur optimalen Behandlung unterschiedlichster Produkte mit größer werdendem Biegewinkel gleichzeitig auch der Biegeradius vergrößert oder verkleinert werden kann, ebenso auch, dass die Querbiegung produktabhängig eine degressiv, aber auch progressiv verlaufende Kurve sein kann und dass die Scher-Wurfschaufel in Längsrichtung, zusätzlich zur Querbiegung, von der Sichelspitze her und in der Draufsicht gesehen unter Bildung eines Winkels δ zwischen der Tangente an die Biegung und der Längsachse der Erstreckung des Werkzeuges gegen die linke oder rechte Seitenwand hin gebogen sein kann.

Ebenso versteht sich, dass produktabhängig zu einer gewünschten Wirkung der am weiteren Arm angebrachte Wandschaber ebenfalls als sichelförmige, jedoch flache, also im Querschnitt nicht gebogene, in Längsrichtung gerade oder aber gegen die linke oder rechte Seitenwand gebogene Wurfschaufel mit gleichbleibendem minimalen Abstand zur Troginnenwand ausgebildet sein kann.

Demzufolge werden die erfindungsgemässen Scher-/Mischwerkzeuge bevorzugt in Conchiermaschinen zum Conchieren von Schokolademassen sowie in Verflüssiger- oder Mischmaschinen von Compound- und Füllmassen in der Süßwarenindustrie eingesetzt.

Effiziente Conchiermaschinen zeichnen sich bekanntlich dadurch aus, dass ein und dieselbe Maschine in einem Arbeitsgang mehrere verfahrenstechnische Grundoperationen, wie Mischen, Scheren und Belüften, optimal ausführen. Bei Schokolademassen kann damit die Umstrukturierung des pulverförmigen Walzgutes in eine fließfähige Suspension effizient durchgeführt und gleichzeitig die Schokolademassen entsäuert werden, ohne Aromaeinbußen zu erleiden, entstanden durch örtliche Überhitzungen infolge zu hoher Reibung des Produktes.

Weitere Vorteile und Ausführungsbeispiele ergeben sich aus der Beschreibung und der beigefügten Zeichnung. Die einzelnen Figuren der Zeichnungen zeigen das Scher-/Mischwerkzeug teilweise stark schematisiert und sind nicht maßstäblich zu verstehen, wobei die verschiedenen Ausführungsformen nicht als abschließende Aufzählung zu verstehen sind, sondern beispielhaften Charakter haben. Es zeigen:
- Fig. 1: ein Scher-/Mischwerkzeug gemäss DE-A-19636989 mit einer in Längsrichtung geraden, im Querschnitt mit von der Sichelspitze zum umgedreht löffelförmigen Ende hin zunehmendem Biegewinkel kreisbogenförmig gebogenen Scher-Wurfschaufel mit von der Sichelspitze wegzunehmendem Abstand der Scher-Wurfschaufelperipherie zur Troginnenwand zu einer Trommel;
- Fig. 2: eine erste Ausführungsform eines erfindungsgemässen Scher-/Mischwerkzeugs;

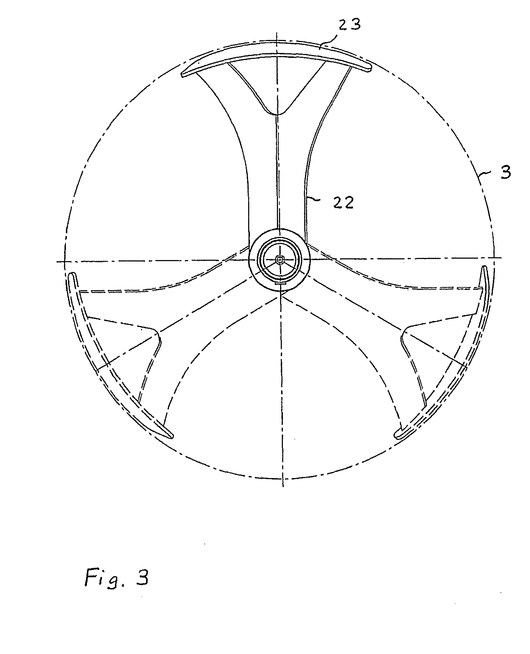

- Fig. 3: das erfindungsgemäße Scher-/Mischwerkzeug in anderer Darstellung;
- Fig. 4: eine zweite Ausführungsform des erfindungsgemässen Scher-/Mischwerkzeugs in seitlicher Ansicht;
- Fig. 5: eine zweite Ausführungsform des erfindungsgemässen Scher-/Mischwerkzeugs in perspektivischer Ansicht;
- Fig. 6: eine zweite Ausführungsform des erfindungsgemässen Scher-/Mischwerkzeugs in Draufsicht;
- Fig. 7a-7f: weitere Ausführungsformen des erfindungsgemässen Scher-/Mischwerkzeugs in Draufsicht;
- Figur 8: ein alternatives Beispiel für ein Scher/Mischwerkzeug in perspektivischer Ansicht.

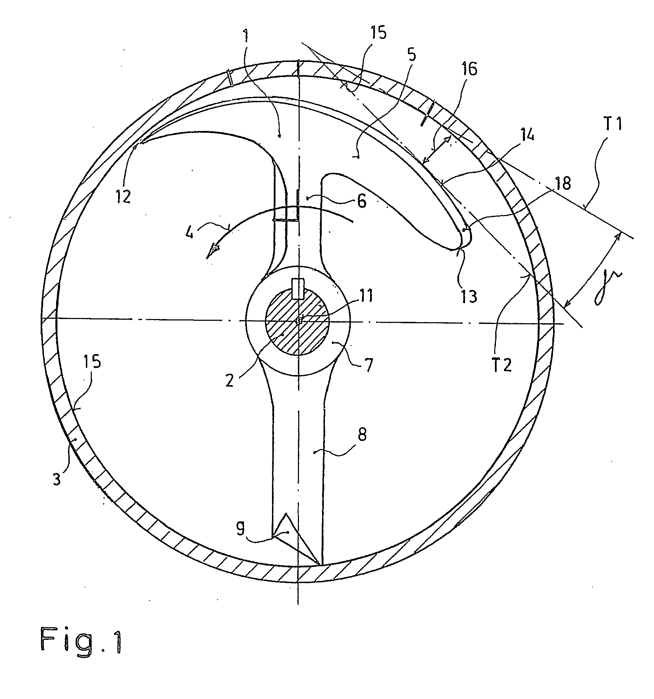

Die Figur 1 zeigt in einer Seitenansicht und im Schnitt ein vorbekanntes Scher-/Mischwerkzeug 1, wie es auf einer Welle 2 kraftschlüssig befestigt ist und wie die Welle 2 mit dem Scher-/Mischwerkzeug 1 in einem Trog 3 angeordnet ist. Mehrere Scher-/Mischwerkzeuge 1 auf der Welle 2 bilden einen Scher-/Mischrotor. Mit Pfeilrichtung 4 ist die Drehrichtung des Scher-/Mischrotors angedeutet. Die Werkzeuganordnung setzt sich aus dem Scher-/Mischwerkzeug 1 mit einer Scher-Wurfschaufel 5 an einem Arm 6 und einem Befestigungsring 7 und einem weiteren, gegenüberliegenden Arm 8 mit einem Wandschaber 9 zusammen. Der Arm 6 mit dem Befestigungsring 7 und der Gegenarm 8 ist entweder lösbar an der Welle 2 befestigt (Nut mit Feder), oder der Arm 6 mit Befestigungsring 7 und mit Gegenarm 8 ist mit der Welle 2 verschweißt.

Das erfindungsgemässe Scher-/Mischwerkzeug 20 ist kraft- und formschlüssig mittels eines Befestigungsringes 21 auf einer Welle 2 befestigt. Ein Arm 22 ist mit einer Scher-/Wurfschaufel 23 verbunden. Die Scher-/Wurfschaufel 23 besteht wie der Arm 22 aus gebogenem Stahlblech. Die Schaufel 23 besteht aus einem gebogenen Blech und ist um ca. 15° angestellt. Die äussere Kante der Schaufel ist nahezu parallel zum Trog angeordnet. Der Arm 22 ist ein Y-förmiges Stegblech, das gekantet ist und senkrecht oder in einem Winkel auf einen Halbring 24 des Befestigungsringes 21 geschweisst ist.

Zwischen den Stegen des Arms 22 ist eine dreieckige Öffnung 25 ausgespart. Die Blechkonstruktion ermöglicht eine deutliche Gewichtsreduktion gegenüber der in Fig. 1 dargestellten Ausführung. Die Öffnung 25 weist bevorzugt die Form eines gleichschenkligen Dreiecks auf.

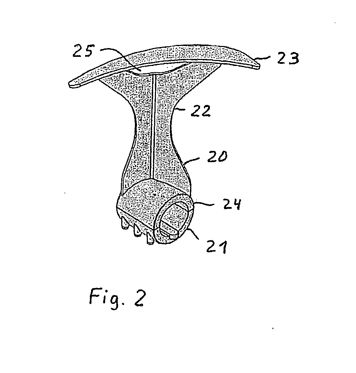

Der Arm 22 ist im Ausführungsbeispiel geknickt und schräg gestellt (Fig. 2).

Anstelle einer geschweissten Blechkonstruktion sind auch gegossene Ausführungen möglich.

Wenn auch das Werkzeug oben im Zusammenhang mit einem vollzylinderförmigen, als Trommel ausgebildeten Conchentrog beschrieben ist, so versteht es sich, dass die Erfindung mit gleichen Vorteilen an teilzylindrischen Conchentrogabteilen bei Conchen mit mehr als einer Conchierwelle angewandt werden kann, wie solche an sich bekannt sind.

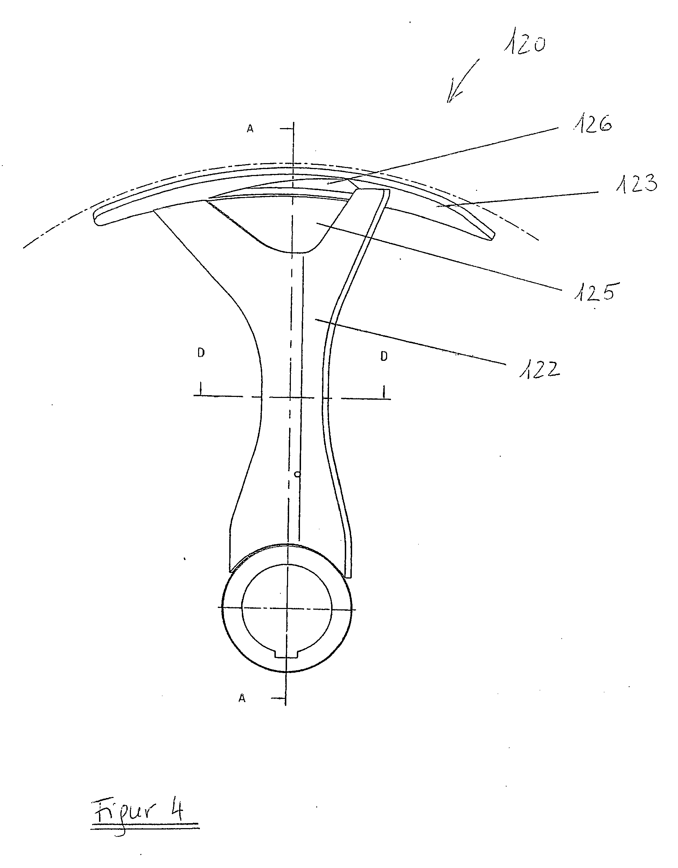

Figur 4 zeigt eine zweite Ausführungsform des erfindungsgemässen Scher/Mischwerkzeugs 120 in seitlicher Ansicht. Zusätzlich zu einer ersten Öffnung 125 in dem Arm 122 des Werkzeuges 120 befindet sich eine zweite Öffnung 126 in der Scher-und Wurfschaufel 123.

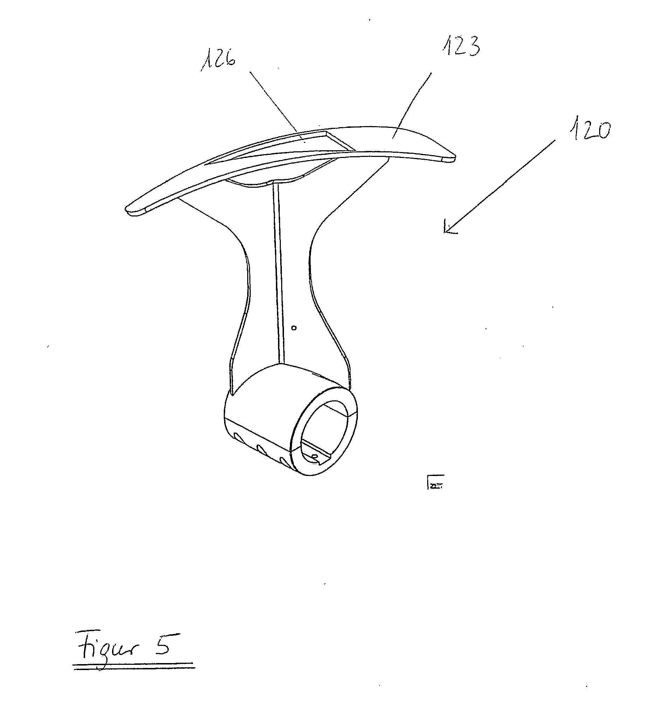

Figur 5 zeigt die zweite Ausführungsform des erfindungsgemässen Scher/Mischwerkzeugs in perspektivischer Ansicht. Die zweite Öffnung 126 hat in diesem Ausführungsbeispiel eine dreieckige Grundform und folgt damit in etwa der Form der Scher-/Wurfschaufel 123.

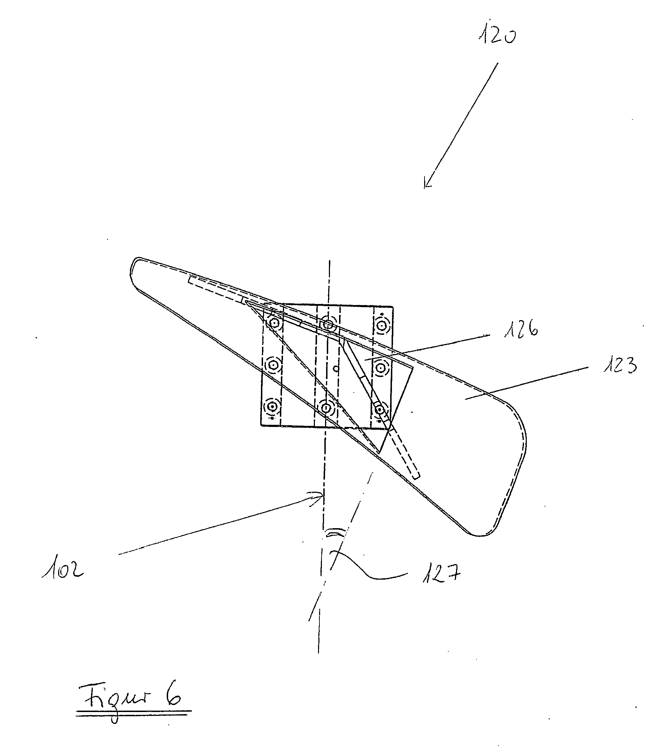

Figur 6 zeigt die zweite Ausführungsform des erfindungsgemässen Scher-/Misch-werkzeugs in Draufsicht. Es wird deutlich, dass die Scher-/Wurfschaufel 123 und damit auch die Öffnung 126 gegenüber der Wellenachse 102 um einen Winkel 127 verschwenkt ist.

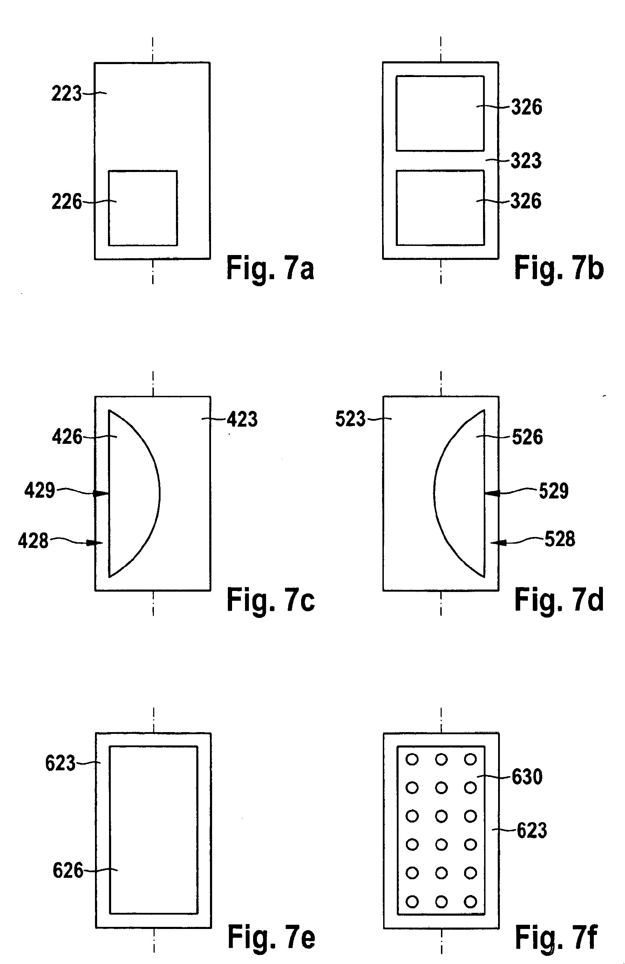

Figuren 7a-7f zeigen weitere Ausführungsformen des erfindungsgemässen Scher-/Mischwerkzeugs in Draufsicht.

Figur 7a zeigt eine Scher-/Wurfschaufel 223 mit einer assymetrisch angeordneten Öffnung 226.

Figur 7b zeigt eine Scher-/Wurfschaufel 323 mit einer doppelten Öffnung 326.

Figuren 7c und 7d zeigen Scher-/Wurfschaufeln 423, 523 mit Öffnungen, die gerade und gerundete Aussenkonturen aufweisen. Die gerade Kante 429 der Öffnung 426 kann auf der Seite 428 der Scher-/Wurfschaufel 423 angeordnet sein, die weiter entfernt von der Troginnenseite vorgesehen ist, oder die gerade Kante 529 kann auf der Seite 528 der Scher-/Wurfschaufel 523, die näher an der Troginnenseite vorgesehen ist.

Figur 7e zeigte eine Scher-/Wurfschaufel 623 mit einer grossen Öffnung 626. Diese kann zur Aufnahme eines Einsatzes dienen.

Figur 7f zeigt dieselbe Scher-/Wurfschaufel 623, wobei in der Öffnung 626 ein Lochblech 630 eingesetzt ist.

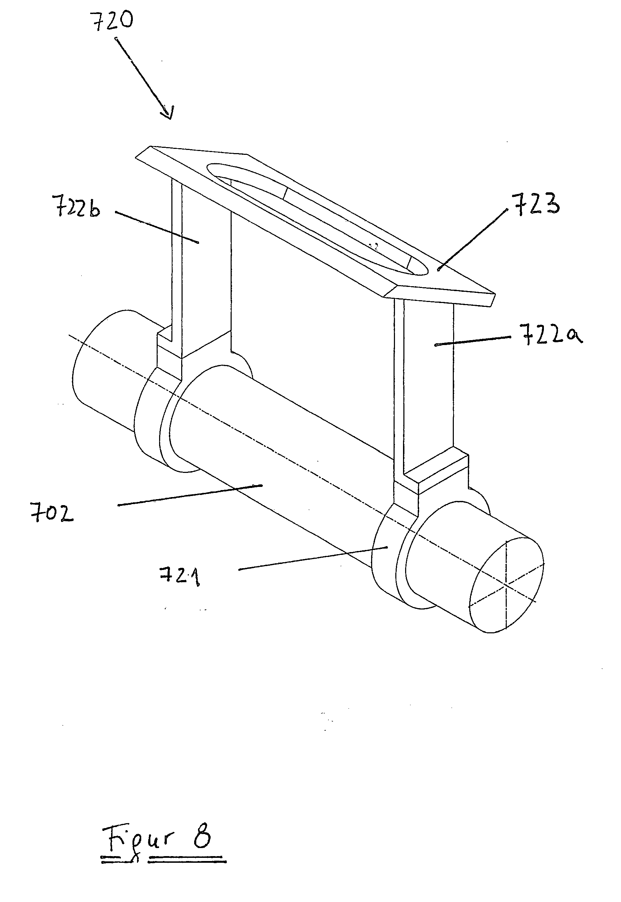

Figur 8 zeigt ein alternatives Beispiel für ein Scher/Mischwerkzeug 720 in perspektivischer Ansicht. Die Scher-Wurfschaufel 723 ist in Form einer Platte ausgebildet, die von zwei Armen 722a, 722b gehalten wird. Über ringförmige Befestigungselemente 721 sind die Arme 722a, 722b an der Welle 702 befestigt.

## Patentansprüche

1. Scher-/Mischwerkzeug (20; 120; 720), anordbar an einer in einem wenigstens teilweise zylindrischen Trog (3) koaxial und drehbar gelagerten Welle (2;702), sodass das Scher-/Mischwerkzeug (20; 120; 720) mit der Welle (2) über einen Werkzeugträger eine Rotoranordnung bildet, wobei das Scher-/Mischwerkzeug eine gekrümmte Scher-/Wurfschaufel (23; 123; 223; 323; 423, 523, 623; 723) und mindestens einen Arm (22; 122; 722a, 722b) umfasst, der gerade, schräg gestellt und/oder geknickt ist, **dadurch gekennzeichnet, dass** das Werkzeug (20; 120; 720) mindestens eine Öffnung (25; 125, 126; 226; 326; 426; 526; 626; 726) aufweist, wobei mindestens eine Öffnung (25; 125) zwischen Arm (22; 122) und Scher-/Wurfschaufel (23; 123) vorgesehen ist.

2. Scher-/Mischwerkzeug nach Anspruch 1 **dadurch gekennzeichnet, dass** mindestens eine Öffnung (25; 125) in dem Arm (22; 122) vorgesehen ist.

3. Scher-/Mischwerkzeug nach Anspruch 1 oder 2 **dadurch gekennzeichnet, dass** mindestens eine Öffnung (126; 226; 326; 426; 526; 626; 726) in der Scher-/Wurfschaufel (123; 223; 323; 423, 523, 623; 723) vorgesehen ist.

4. Scher-/Mischwerkzeug nach einem der vorhergehenden Ansprüche **dadurch gekennzeichnet, dass** mindestens eine Öffnung (25, 126; 226; 326; 426; 526; 626) dreieckig ist.

5. Scher-/Mischwerkzeug nach einem der vorhergehenden Ansprüche **dadurch gekennzeichnet, dass** sich die Querschnittsfläche mindestens einer Öffnung (25; 126; 226; 326; 426; 526; 626) verengt und/oder erweitert.

6. Scher-/Mischwerkzeug nach einem der vorhergehenden Ansprüche, **dadurch gekennzeichnet, dass** der Arm (22; 122) aus dem Y-förmigen und gekanteten Stegblech oder einem entsprechenden Gussteil gebildet ist.

7. Scher-/Mischwerkzeug nach einem der vorhergehenden Ansprüche, **dadurch gekennzeichnet, dass** an jedem axialen Ende einer Scher-/Wurfschaufel (23; 123; 223; 323; 423, 523, 623) und/oder eines Wandschabers (9) je ein Werkzeugträger in Form von ringförmigen Befestigungselementen (21) vorgesehen ist, so dass diese ringförmigen Befestigungselemente (21) jeweils in einem Abstand längs der Rotorachse der Welle (2) angeordnet sind.

8. Scher-/Mischwerkzeug nach einem der vorhergehenden Ansprüche, **dadurch gekennzeichnet, dass** die Scher-Wurfschaufel (23; 123; 223; 323; 423, 523, 623) kreisbogenförmig gekrümmt ist.

## Claims

1. Shearing/mixing tool (20; 120; 720), arrangeable on a shaft (2; 702), which is mounted coaxially and rotatably in an at least partially cylindrical trough (3), and therefore the shearing/mixing tool (20; 120; 720) forms a rotor arrangement with the shaft (2) via a tool carrier, wherein the shearing/mixing tool comprises a curved shearing/throwing blade (23; 123; 223; 323; 423, 523, 623; 723) and at least one arm (22; 122; 722a, 722b) which is rectilinear, is positioned obliquely and/or is bent, **characterized in that** the tool (20; 120; 720) has at least one opening (25; 125, 126; 226; 326; 426; 526; 626; 726), wherein at least one opening (25; 125) is provided between the arm (22; 122) and the shearing/throwing blade (23; 123).

2. Shearing/mixing tool according to Claim 1, **characterized in that** at least one opening (25; 125) is provided in the arm (22; 122).

3. Shearing/mixing tool according to Claim 1 or 2, **characterized in that** at least one opening (126; 226; 326; 426; 526; 626; 726) is provided in the shearing/throwing blade (123; 223; 323; 423, 523, 623; 723).

4. Shearing/mixing tool according to one of the preceding claims, **characterized in that** at least one opening (25, 126; 226; 326; 426; 526; 626) is triangular.

5. Shearing/mixing tool according to one of the preceding claims, **characterized in that** the cross-sectional area of at least one opening (25; 126; 226; 326; 426; 526; 626) contracts and/or enlarges.

6. Shearing/mixing tool according to one of the preceding claims, **characterized in that** the arm (22; 122) is formed from the web plate which is Y-shaped and is turned on edge, or from a corresponding cast part.

7. Shearing/mixing tool according to one of the preceding claims, **characterized in that** a respective tool carrier in the form of annular fastening elements (21) is provided at each axial end of a shearing/throwing blade (23; 123; 223; 323; 423, 523, 623) and/or of a wall scraper (9) such that said annular fastening elements (21) are each arranged at a distance along the rotor axis of the shaft (2).

8. Shearing/mixing tool according to one of the preceding claims, **characterized in that** the shearing/throwing blade (23; 123; 223; 323; 423, 523, 623) is curved in the shape of an arc of a circle.

## Revendications

1. Outil de cisaillement/mélange (20 ; 120 ; 720), pouvant être disposé sur un arbre (2 ; 702) monté à rotation et coaxialement dans une cuve au moins partiellement cylindrique (3), de sorte que l'outil de cisaillement/mélange (20 ; 120 ; 720) forme avec l'arbre (2) par le biais d'un support d'outil un agencement de rotor, l'outil de cisaillement/mélange comprenant une aube de cisaillement/éjection courbe (23 ; 123 ; 223 ; 323 ; 423, 523, 623 ; 723) et au moins un bras (22 ; 122 ; 722a, 722b) qui est droit, disposé obliquement et/ou coudé, **caractérisé en ce que** l'outil (20 ; 120 ; 720) présente au moins une ouverture (25 ; 125, 126 ; 226 ; 326 ; 426 ; 526 ; 626 ; 726), au moins une ouverture (25 ; 125) étant prévue entre le bras (22 ; 122) et l'aube de cisaillement/éjection (23 ; 123).

2. Outil de cisaillement/mélange selon la revendication 1, **caractérisé en ce qu'**au moins une ouverture (25 ; 125) est prévue dans le bras (22 ; 122).

3. Outil de cisaillement/mélange selon la revendication 1 ou 2, **caractérisé en ce qu'**au moins une ouverture (126 ; 226 ; 326 ; 426 ; 526 ; 626 ; 726) est prévue dans l'aube de cisaillement/éjection (123 ; 223 ; 323 ; 423, 523, 623 ; 723).

4. Outil de cisaillement/mélange selon l'une quelconque des revendications précédentes, **caractérisé en ce qu'**au moins une ouverture (25, 126 ; 226 ; 326 ; 426 ; 526 ; 626) est triangulaire.

5. Outil de cisaillement/mélange selon l'une quelconque des revendications précédentes, **caractérisé en ce que** la surface en section transversale d'au moins une ouverture (25 ; 126 ; 226 ; 326 ; 426 ; 526 ; 626) se rétrécit et/ou élargit.

6. Outil de cisaillement/mélange selon l'une quelconque des revendications précédentes, **caractérisé en ce que** le bras (22 ; 122) est formé de la tôle d'âme en forme de Y et cintrée ou d'une pièce coulée correspondante.

7. Outil de cisaillement/mélange selon l'une quelconque des revendications précédentes, **caractérisé en ce qu'**un porte-outil en forme d'éléments de fixation annulaires (21) est à chaque fois prévu au niveau de chaque extrémité axiale d'une aube de cisaillement/éjection (23 ; 123 ; 223 ; 323 ; 423, 523, 623) et/ou d'un racloir de paroi (9), de telle sorte que ces éléments de fixation annulaires (21) soient disposés à chaque fois à une certaine distance le long de l'axe de rotor de l'arbre (2).

8. Outil de cisaillement/mélange selon l'une quelconque des revendications précédentes, **caractérisé en ce que** l'aube de cisaillement/éjection (23 ; 123 ; 223 ; 323 ; 423, 523, 623) est courbée en forme d'arc de cercle.
